# FASCICULE DE BREVET EUROPEEN

(11) **EP 0 701 078 B1**
(45) Date de publication et mention de la délivrance du brevet: **07.04.1999**
(21) Numéro de dépôt: 95402026.9
(22) Date de dépôt: 07.09.1995
(51) Int. Cl.: F16K 41/12

(54) **Vanne à clapet et membrane**
Ventil mit Verschlusselement und Membran
Valve with closure member and diaphragm

(30) Priorité: 09.09.1994 FR 9410792
(43) Date de publication de la demande: 13.03.1996
(73) Titulaire: DEFONTAINE, 85530 La Bruffière (FR)
(72) Inventeur: Bonnefous, Jean, F-44400 Reze (FR)
(74) Mandataire: Farges, Roger

(56) Documents cités:
- US-A- 3 164 365

## Description

L'invention concerne les vannes à clapet, et plus particulièrement celles destinées notamment aux industries agro-alimentaires, sanitaires et pharmaceutiques.

Les vannes à clapet connues comportent un corps dans lequel débouchent des conduits pouvant sélectivement être séparés et mis en communication par un clapet mobile dans une chambre entre une position dans laquelle il est contre un siège et une position dans laquelle il est à une distance prédéterminée de celui-ci. Le clapet ou le siège comporte un joint en caoutchouc ou en matière plastique assurant l'étanchéité entre eux. Un chapeau ou couvercle ferme le passage nécessaire à l'introduction du clapet dans la chambre du corps ; ce chapeau est étanché par rapport au corps généralement au moyen d'un joint torique en caoutchouc ou en matière plastique ; il est traversé par une tige de clapet à laquelle est solidarisé celui-ci, et l'étanchéité entre le chapeau et la tige de clapet est assurée par une bague en caoutchouc ou en matière plastique. L'ouverture et la fermeture de la vanne sont provoquées par la commande d'un actionneur linéaire auquel est liée la tige de clapet. La dégradation rapide des joints est un inconvénient grave, plus particulièrement dans les industries agro-alimentaires, sanitaires et pharmaceutiques, car ceux-ci deviennent alors spongieux, c'est-à-dire que le caoutchouc (ou analogue) absorbe le liquide et le rejette ultérieurement, et également il peut se former des crevasses facilitant le développement des bactéries, ce qui est susceptible d'être la source de contaminations fâcheuses et également de fuites.

Un autre inconvénient est lié à la présence de la bague d'étanchéité de la tige de clapet, le fonctionnement coulissant amenant, dans le cas des liquides épais, une remontée de ce liquide le long de cette tige ; ce phénomène existe par exemple avec la crème de lait.

Pour remédier à cet inconvénient, on a créé des vannes comportant une membrane fixée entre le corps et le chapeau et rendue solidaire de la tige de clapet, mais ces vannes ont une faible tenue en pression et aux sollicitations répétées liées aux manoeuvres de la vanne.

L'invention a pour but de remédier aux inconvénients de ces vannes connues, par la suppression des joints en caoutchouc ou en matière plastique.

A cet effet, l'invention concerne une vanne à clapet et membrane, du type comportant un corps présentant une chambre dans laquelle débouchent des conduits d'entrée et de sortie de fluide et un siège à la jonction de la chambre et de l'un des conduits, munie d'un clapet mobile entre une position de fermeture et une position de pleine ouverture de la vanne dans lesquelles respectivement il est contre le siège et il est à une distance prédéterminée de celui-ci, vanne caractérisée en ce que le corps de la vanne est fixé à un chapeau et l'espace interne du chapeau est séparé de la chambre de la vanne par une membrane traversée par une tige de clapet, membrane dont d'une part le pourtour est disposé contre celui d'un organe de guidage de membrane évasé, les pourtours de la membrane et de cet organe de guidage étant immobilisés entre le chapeau et le corps, et dont d'autre part la partie centrale comporte un trou dont le pourtour est immobilisé entre un moyen d'appui dont est munie la tige du clapet et au moins un autre organe de guidage de membrane, les organes de guidage de la membrane présentant des formes arrondies servant de soutien à celle-ci respectivement lorsqu'elle est dans la position qu'elle occupe lors de l'ouverture de la vanne et dans la position qu'elle occupe lors de la fermeture de celle-ci.

Ainsi, non seulement on évite les inconvénients liés à l'emploi du caoutchouc et de la matière plastique, mais on obtient une tenue à la pression interne de la vanne très supérieure à celle d'une vanne à membrane libre, ainsi qu'une meilleure tenue à la fatigue en sollicitations ouverture-fermeture.

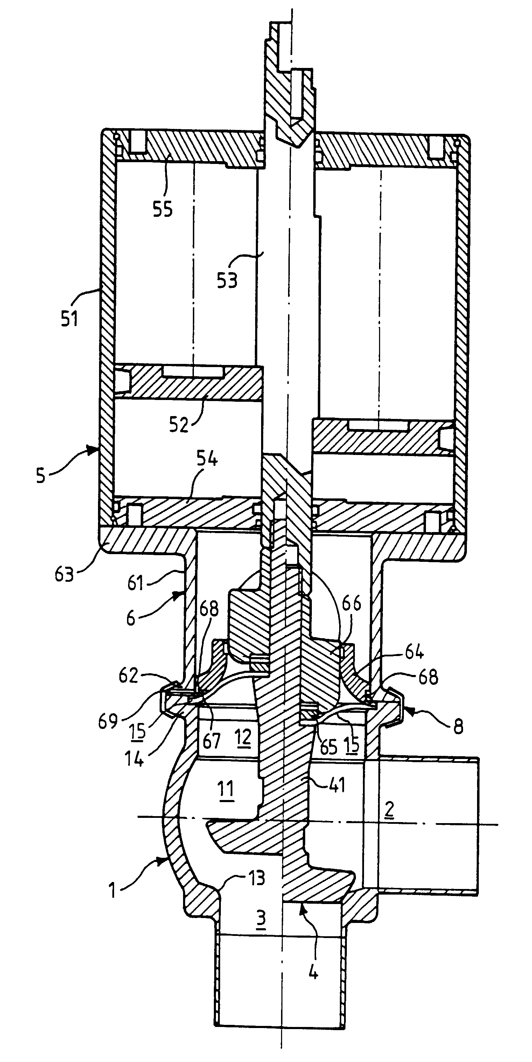

D'autres caractéristiques et avantages ressortiront de la description qui va suivre d'une forme de réalisation d'une vanne selon l'invention, donnée à titre d'exemple non limitatif en référence au dessin ci-joint qui est une section longitudinale schématique d'une telle vanne, constituée d'une demi-section montrant cette vanne en position d'ouverture et d'une demi-section la montrant en position de fermeture.

La vanne représentée sur la figure comporte un corps 1 creux présentant une chambre interne 11 dans laquelle débouchent perpendiculairement deux conduits 2, 3 d'entrée et de sortie de fluide et, à l'opposé de l'un des conduits (ici le conduit 3 de sortie de fluide) et coaxialement dans le prolongement de celui-ci, un alésage 12 adapté à livrer passage à un clapet 4 et sa tige 41 ; le clapet et sa tige sont mobiles entre une position dans laquelle le clapet est contre un siège 13 réalisé à la jonction de la chambre 11 et du conduit 3 auquel est opposé l'alésage 12, autour de ce conduit 3, et une position de pleine ouverture dans laquelle le clapet est éloigné à une distance prédéterminée du siège ; ni le siège ni le clapet ne porte un joint, et ainsi, lorsque le clapet est en position de fermeture, aucun joint ne vient s'interposer entre ces deux éléments, lesquels sont en un métal spécifique convenablement choisi en fonction de cette caractéristique.

Un actionneur 5 de vanne destiné à la commande du clapet est fixé au corps 1 au moyen d'un chapeau 6 de raccordement comportant un puits central 61 muni à ses deux extrémités opposées de deux brides 62, 63 de fixation respectivement au corps 1 de la vanne et à l'actionneur ; pour la fixation du chapeau de raccordement, le corps 1 de la vanne comporte lui-même une bride 14 autour de l'alésage 12 ; les deux brides 62, 14 respectivement du chapeau et du corps de la vanne présentent en regard, des faces en forme de couronnes circulaires planes et perpendiculaires à l'axe longitudinal commun à l'alésage 12 et au puits 61, mais leurs faces opposées, également planes, sont inclinées, de telle sorte qu'un collier de bridage schématisé en 8, constitué de segments présentant chacun des parois en regard de même inclinaison, provoque lors de sa fermeture, par un effet de coin, le rapprochement des brides 62, 14 en direction axiale et leur appui étanche l'une contre l'autre.

L'actionneur 5 est un cylindre dont le corps 51 renferme un piston 52 coulissant dont la tige 53 est fixée à la tige 41 du clapet ; la fixation de la tige de piston à la tige de clapet est assurée par le fait que la tige de clapet présente un filetage à son extrémité libre tournée vers l'actionneur, tandis que la tige de piston présente un trou taraudé dans son extrémité libre tournée vers la vanne, et les deux tiges sont vissées l'une dans l'autre. Le corps 51 du cylindre est fermé à ses deux extrémités par un couvercle respectif 54, 55 percé d'un trou central pour le passage et le guidage de la tige 53 du piston ; le couvercle 54 situé côté vanne, en appui contre le chapeau 6 de raccordement et plus précisément contre la bride 63 de fixation du chapeau au cylindre, isole de manière étanche l'intérieur du corps 51 où coulisse le piston de manière ajustée, de l'intérieur du chapeau.

L'étanchéité du chapeau 6 par rapport à l'actionneur 5, du corps 51 de l'actionneur par rapport aux couvercles 54, 55 et au piston 52, et des couvercles 54, 55 par rapport à la tige 53 du piston, est assurée par des garnitures ou joints disposés dans des logements.

Afin d'éviter la remontée du fluide transitant dans la vanne, le long de la tige 41 du clapet, une membrane souple à déroulement 15 est fixée par sa périphérie entre le corps 1 et le chapeau, et solidarisée à la tige de clapet par sa partie centrale, plus précisément par le pourtour d'un trou central dans la membrane.

A cet effet, selon l'invention, le pourtour de la membrane 15 est immobilisé dans le fond d'un lamage entourant l'alésage 12 du corps 1 de la vanne à l'extrémité de celui-ci en contact avec le chapeau 6, contre le pourtour de l'évasement périphérique d'un guide 64 de membrane, par la pression des brides en regard 14, 62 du corps 1 et du chapeau 6, engendrée par le collier de bridage 8. Le guide 64 présente une forme de révolution à profil arrondi allant en s'évasant depuis une partie d'extrémité de plus petit diamètre entourant (côté actionneur) la tige du clapet à distance de celui-ci à l'intérieur du chapeau 6, vers une partie d'extrémité opposée de plus grand diamètre en contact contre la paroi intérieure du chapeau, qui est celle qui est pincée avec le pourtour de la membrane 61 entre les brides du chapeau et du corps de la vanne ; la tige 41 du clapet présente, comme moyen d'appui pour la membrane, un épaulement dont le grand diamètre est du côté du clapet, de telle sorte que le pourtour du trou central de la membrane 15 soit pincé entre, d'un côté, cet épaulement, et de l'autre côté, une garniture 65 annulaire portée par une extrémité d'un autre guide 66 de membrane enfilé autour de la tige 41 du clapet et en appui contre l'extrémité de la tige 53 du piston tournée vers le clapet ; la périphérie de ce guide 66 de membrane portant la garniture annulaire 65 et enfilé autour de la tige du clapet, est montée coulissante à l'intérieur du guide évasé 64 et présente une surface extérieure cylindrique à section droite circulaire dont le diamètre extérieur est très légèrement inférieur au diamètre intérieur du guide évasé 64, un joint ou une garniture pouvant être interposé entre les guides ; tandis que la forme de l'évasement du guide évasé 64 est épousée par la membrane 15 pour lui servir de soutien dans la position qu'elle occupe lors de l'ouverture de la vanne, la garniture de guidage 65 et le guide 66 enfilé autour de la tige de clapet présentent du côté du clapet des formes respectives arrondies dont l'enveloppe est épousée par la membrane lors de la fermeture de la vanne, de telle sorte que ces deux pièces soutiennent alors celle-ci.

Afin qu'en cas de rupture de la membrane 15, cette rupture soit mise en évidence avant que le fluide dont la vanne est destinée à assurer ou interrompre le transit puisse remonter vers l'actionneur, le guide évasé 64 comporte quelques canaux 67 s'étendant radialement et régulièrement espacés angulairement, le traversant depuis sa zone arrondie en contact avec la membrane en position de fermeture jusqu'au fond d'une gorge 68 creusée dans la surface périphérique de ce guide en contact avec la paroi intérieure du puits 61 du chapeau 6, et le chapeau 6 comporte lui-même des canaux 69 s'étendant radialement et débouchant à une extrémité dans cette gorge 68 et à l'extrémité opposée à l'extérieur du chapeau. De la sorte, en cas de rupture de la membrane 15, le fluide est en priorité transmis par les canaux 67 depuis le volume interne de l'évasement du guide 64, à la gorge 68, et de la gorge 68 à la périphérie du chapeau par les canaux 69 de celui-ci, et cette fuite peut être détectée avant qu'une quantité notable de fluide ait pu remonter jusqu'à l'actionneur ; une gorge et des canaux peuvent être prévus également dans le chapeau et/ou dans le corps de la vanne, au même niveau.

Ainsi, comme on l'a vu, nul joint en caoutchouc ou en matière plastique n'est susceptible d'être en contact avec le fluide.

En effet, d'une part, le clapet 4 entre en contact directement avec le siège 13 en une seule pièce avec le corps 1, et l'étanchéité est assurée par une excellente géométrie des surfaces en contact ; le maintien de l'étanchéité dans le temps est garanti par l'utilisation de métaux adaptés et résistant parfaitement aux chocs mécaniques et à la corrosion. Plus particulièrement, le siège et le clapet sont réalisés en un alliage à base de cobalt connu commercialement sous le nom de "stellite", qui présente une grande dureté ; le siège est formé sur le corps, qui est par exemple en acier inoxydable austénitique, par le dépôt de cet alliage en fusion et un traitement thermique aboutissant à l'obtention d'une pièce en un seul bloc sans frontière visible entre le siège et le reste du corps.

D'autre part la membrane à déroulement 15, en une matière plastique inerte, comme le nécessite l'applicabilité aux produits alimentaires, assure l'étanchéité entre la vanne et le chapeau 6 de raccordement à l'actionneur.

Grâce aux organes de guidage 64, 65, 66 qui supportent et soutiennent la membrane 15 lors de l'ouverture et de la fermeture et à leurs formes arrondies en lieu et place d'arêtes vives côté clapet, le déroulement de la membrane reste compatible avec la résistance à la flexion et à la tension de la matière plastique qui la constitue, et c'est pourquoi la tenue de cette membrane à la pression interne de la vanne et à la fatigue est notablement supérieure à celle d'une membrane libre.

Bien entendu, l'invention n'est pas limitée à la forme de réalisation ci-dessus décrite et représentée, et on pourra en prévoir d'autres sans sortir de son cadre.

## Revendications

1. Vanne à clapet et membrane, du type comportant un corps (1) présentant une chambre (11) dans laquelle débouchent des conduits (2, 3) d'entrée et de sortie de fluide et un siège (13) à la jonction de la chambre et de l'un des conduits, munie d'un clapet (4) mobile entre une position de fermeture et une position de pleine ouverture de la vanne dans lesquelles respectivement il est contre le siège (13) et il est à une distance prédéterminée de celui-ci, vanne caractérisée en ce que le corps (1) de la vanne est fixé à un chapeau (6) et l'espace interne du chapeau est séparé de la chambre (11) de la vanne par une membrane (15) traversée par une tige (41) de clapet, membrane dont d'une part le pourtour est disposé contre celui d'un organe de guidage (64) de membrane évasé, les pourtours de la membrane et de cet organe de guidage étant immobilisés entre le chapeau (6) et et le corps (1), et dont d'autre part la partie centrale comporte un trou dont le pourtour est immobilisé entre un moyen d'appui dont est munie la tige (41) du clapet (4) et au moins un autre organe de guidage (65, 66) de membrane, les organes de guidage (64 ; 65, 66) de la membrane présentant des formes arrondies servant de soutien à celle-ci respectivement lorsqu'elle est dans la position qu'elle occupe lors de l'ouverture de la vanne et dans la position qu'elle occupe lors de la fermeture de celle-ci.

2. Vanne selon la revendication 1, caractérisée en ce que le clapet (4) et le siège (13) sont en métal, et, en position de fermeture de la vanne, sont appliqués l'un contre l'autre sans interposition de joint ou de garniture.

3. Vanne selon la revendication 1, caractérisée en ce qu'elle comporte deux organes de guidage (65, 66) de la membrane (15) présentant des formes arrondies servant de soutien à celle-ci dans la position qu'elle occupe lors de la fermeture de la vanne, et l'un de ces organes de guidage est monté coulissant à l'intérieur de l'organe de guidage évasé (64) dont l'évasement est épousé par la membrane dans la position qu'elle occupe lors de l'ouverture de la vanne.

4. Vanne selon la revendication 1, caractérisée en ce que le pourtour de la membrane (15) est logé dans un lamage du corps (1) de la vanne.

5. Vanne selon la revendication 1, caractérisée en ce que la tige (41) du clapet comporte un épaulement pour l'appui du pourtour du trou central de la membrane (15).

6. Vanne selon la revendication 1, caractérisée en ce que l'organe de guidage évasé (64), et le corps (1) de la vanne ou le chapeau (6), comportent des canaux (67, 69) faisant communiquer le volume interne de l'évasement et l'extérieur de la vanne.

7. Vanne selon la revendication 6, caractérisée en ce que au moins l'organe de guidage évasé (64) ou le corps (1) de la vanne ou le chapeau (6) présente une gorge (68) faisant communiquer les canaux (67, 69).

8. Vanne selon la revendication 1, caractérisée en ce que le siège (13) est en un seul bloc avec le corps (1).

9. Vanne selon la revendication 1, caractérisée en ce que le siège (13) est en stellite.

10. Vanne selon la revendication 1, caractérisée en ce que le clapet (4) est en stellite.

## Patentansprüche

1. Ventil mit Verschlußelement und Membran, mit einem Körper (1), welcher eine Kammer (11), in die Flüssigkeitseinlauf- und -auslaufleitungen einmünden, und einen Sitz (13) an der Verbindung zwischen der Kammer und einer der Leitungen aufweist, wobei es mit einem Schließkörper (4) ausgestattet ist, welche zwischen einer Verschlußposition und einer Vollöffnungsposition des Ventils beweglich ist, in denen sie jeweils gegen den Sitz (13) anstoßend bzw. mit einem vorbestimmten Abstand von diesem angeordnet ist, wobei das Ventil dadurch gekennzeichnet ist, daß der Körper (1) des Ventils mit einem Aufsatz (6) verbunden ist und der Innenraum des Aufsatzes von der Kammer (11) des Ventils durch eine von einer Schließkörperstange (41) durchquerten Membran (15) getrennt ist, wobei einerseits der äußere Umfang der Membran gegen denjenigen eines konisch erweiterten Membranführungsorgans (64) angeordnet ist, wobei die äußeren Umfänge der Membran und dieses Führungsorgans zwischen dem Aufsatz (6) und dem Körper (1) festgelegt sind, und andererseits der Mittelteil der Membran ein Loch aufweist, dessen äußerer Umfang zwischen einer Auflagevorrichtung, mit welcher die Stange (41) des Schließkörpers (4) ausgestattet ist, und zumindest einem anderen Membranführungsorgan (65, 66) festgelegt ist, wobei die Führungsorgane (64, 65, 66) der Membran abgerundete Formen aufweisen, welche als Stütze für diese dienen, wenn sie sich jeweils in der Position, welche sie bei der Öffnung des Ventils einnimmt, und in der Position, welche sie bei der Schließung des Ventils einnimmt, befindet.

2. Ventil gemäß Anspruch 1, dadurch gekennzeichnet, daß der Schließkörper (4) und der Sitz (13) aus Metall sind, und sie in der Verschlußposition des Ventils ohne Zwischenanordnung einer Verbindungsstelle oder einer Armatur gegeneinander gepreßt sind.

3. Ventil nach Anspruch 1, dadurch gekennzeichnet, daß es zwei Führungsorgane (65, 66) für die Membran (15) aufweist, welche abgerundete Formen haben, die in der Position, welche sie während der Schließung des Ventils einnimmt, als Stütze für diese dienen, und daß eines dieser Führungsorgane gleitend innerhalb des konisch erweiterten Führungsorgans (64) angeordnet ist, dessen trichterförmige Erweiterung sich der Membran in der Position, die sie während der Öffnung des Ventils einnimmt, anpaßt.

4. Ventil gemäß Anspruch 1, dadurch gekennzeichnet, daß der äußere Umfang der Membran (15) in einer Ausnehmung des Körpers (1) des Ventils angeordnet ist.

5. Ventil gemäß Anspruch 1, dadurch gekennzeichnet, daß die Stange (41) des Schließkörpers einen Absatz zur Auflage des äußeren Umfangs des Mittellochs der Membran (15) aufweist.

6. Ventil gemäß Anspruch 1, dadurch gekennzeichnet, daß das konisch erweiterte Führungsorgan (64) und der Körper (1) des Ventils oder der Aufsatz (6) Kanäle (67, 69) aufweisen, welche das Innenvolumen der trichterförmigen Erweiterung mit dem Äußeren des Ventils verbinden.

7. Ventil gemäß Anspruch 6, dadurch gekennzeichnet, daß zumindest das konisch erweiterte Führungsorgan (64) oder der Körper (1) des Ventils oder der Aufsatz (6) eine Rille (68) zur Verbindung der Kanäle (67, 69) aufweist.

8. Ventil gemäß Anspruch 1, dadurch gekennzeichnet, daß der Sitz (13) mit dem Körper (1) einen einzigen Block bildet.

9. Ventil gemäß Anspruch 1, dadurch gekennzeichnet, daß der Sitz (13) aus Stellit ist.

10. Ventil gemäß Anspruch 1, dadurch gekennzeichnet, daß der Schließkörper (4) aus Stellit ist.

## Claims

1. Valve with valve-member and diaphragm, of the type including a body (1) having a chamber (11) into which open fluid inlet and outlet conduits (2, 3) and a seat (13) at the junction of the chamber and one of the conduits, provided with a valve-member (4) mobile between a closure position and a full-open position of the valve in which it is respectively against the seat (13) and at a predetermined distance from the latter, which valve is characterised by the fact that the body (1) of the valve is fixed to a cap (6) and the space inside the cap is separated from the chamber (11) of the valve by a diaphragm (15) through which a valve stem (41) passes, a diaphragm of which on the one hand the periphery is arranged against that of a funnel-shaped diaphragm guiding organ (64), the peripheries of the diaphragm and of this guiding organ being held in position between the cap (6) and the body (1), and of which on the other hand the central part includes a hole the periphery of which is held in position between a support means with which the stem (41) of the valve-member (4) is provided and at least one other diaphragm guiding organ (65, 66), the organs (64; 65, 66) for guiding the diaphragm having rounded shapes serving to support the latter when it is respectively in the position which it occupies on opening of the valve and in the position which it occupies on closure of the latter.

2. Valve as described in claim 1, characterised by the fact that the valve-member (4) and the seat (13) are made of metal, and, in the closure position of the valve, are applied against each other without interposition of seal or packing.

3. Valve as described in claim 1, characterised by the fact that it includes two organs (65, 66) for guiding the diaphragm (15) having rounded shapes serving to support the latter in the position which it occupies on closure of the valve, and one of these guiding organs is mounted slidably within the funnel-shaped guiding organ (64) the funnel shape of which is assumed by the diaphragm in the position which it occupies on opening of the valve.

4. Valve as described in claim 1, characterised by the fact that the periphery of the diaphragm (15) is housed within a spot-facing in the body (1) of the valve.

5. Valve as described in claim 1, characterised by the fact that the stem (41) of the valve-member includes a shoulder to support the periphery of the central hole of the diaphragm (15).

6. Valve as described in claim 1, characterised by the fact that the funnel-shaped guiding organ (64) and the body (1) of the valve or the cap (6) include channels (67, 69) causing the internal volume of the funnel shape to communicate with the outside of the valve.

7. Valve as described in claim 6, characterised by the fact that at least the funnel-shaped guiding organ (64) or the body (1) of the valve or the cap (6) has a groove (68) causing the channels (67, 69) to communicate.

8. Valve as described in claim 1, characterised by the fact that the seat (13) is in one piece with the body (1).

9. Valve as described in claim 1, characterised by the fact that the seat (13) is made of stellite.

10. Valve as described in claim 1, characterised by the fact that the valve-member (4) is made of stellite.
